# EUROPÄISCHE PATENTANMELDUNG

(11) **EP 3 967 914 A1**
(43) Veröffentlichungstag der Anmeldung: **16.03.2022**
(21) Anmeldenummer: 20195450.0
(22) Anmeldetag: 10.09.2020
(51) Int. Cl.: F16L 3/10, F16L 55/035, F16L 59/135, F16L 3/08

(54) **ISOLIERTER ROHRTRÄGER**

(71) Anmelder: Armacell Enterprise GmbH & Co. KG, 12529 Schönefeld OT Waltersdorf (DE)
(72) Erfinder: Kaiser, Sascha, 48329 Havixbeck (DE); Steiner, Arndt, 51381 Leverkusen (DE); Steinhorst, Thomas, 88260 Argenbühl (DE); Kuisle, Harald, 88167 Gestratz (DE)
(74) Vertreter: Vossius & Partner Patentanwälte Rechtsanwälte mbB

(57) **Zusammenfassung**

Die Erfindung betrifft einen Rohrträger (10) zur Aufhängung und/oder Abstützung einer isolierten Rohrleitung, wobei sich der Rohrträger (10) entlang einer Längsachse (44) erstreckt und einen Hohlzylinder (44) aus Weichschaum, mindestens zwei Tragelemente (60) aus Hartschaum, die in den Hohlzylinder (40) eingesetzt sind, und ein oder mehrere Lastverteilelemente (70), die im Bereich der Tragelemente (60) am Hohlzylinder befestigt sind, aufweist.

## Beschreibung

Die Erfindung betrifft einen verbesserten Rohrträger. Der Rohrträger dient der Aufhängung oder Abstützung einer isolierten Rohrleitung, insbesondere einer Rohrleitung durch die kalte oder heiße Flüssigkeit geleitet wird.

Rohrträger sind grundsätzlich aus dem Stand der Technik bekannt. Isolierte Rohrträger werden beispielsweise unter dem Handelsnamen ArmaFix^{®} AF durch die Fa. Armacell International S.A., Capellen, Luxenburg vertrieben. Weitere Rohrträger sind beispielsweise aus DE 88 09 710 U1, EP 0 503 566 A1 und WO 2016/202775 A1 bekannt.

Isolierte Rohrträger werden üblicherweise zur Aufhängung streckenisolierter Rohre eingesetzt, bei denen das jeweilige Rohr häufig über einen beträchtlichen Teil bzw. im Wesentlichen über seine gesamte Länge mit einer schlauchförmigen Isolierung aus einem Weich- oder Hartschaum umgeben wird. Um die Isolierung des Rohrs auch im Bereich des Rohrträgers zu gewährleisten, wird bei Rohrträgern mit hohem thermischen Isolierungsgrad (z.B. mit hohem Dampfdiffusionswiderstand) ein Hohlzylinder aus Weichschaum verwendet, der im montierten Zustand das Rohr umgibt. Wie etwa in der EP 0 503 566 A1 beschrieben, können in den Hohlzylinder zwei Ringsegmente aus Hartschaum (die auch als Tragelemente bezeichnet werden können) eingesetzt werden, die sich von einer Kontaktfläche mit dem Rohr bis zu einem jeweiligen äußeren Metallblech erstrecken. An den Metallblechen wird dann eine Rohrschelle befestigt. Derartige Rohrschellen sind üblicherweise in Längsrichtung des Rohres und/oder in Längsrichtung des Hohlzylinders 20 bis 25 mm lang (wobei in diesem Zusammenhang auch von einer "Breite" der Rohrschelle gesprochen werden kann).

Bekannt sind darüber hinaus Rohrträger, bei denen ein aus Hartschaum hergestellter Hohlzylinder Verwendung findet. Der Hartschaum-Hohlzylinder wird hierbei an seinen beiden Stirnseiten mit einer dünnen Schicht aus Weichschaum versehen, um bei Montage des Rohrträgers an die Streckenisolierung der Rohrleitung anzudocken. Solche Rohrträger sind allerdings im Hinblick auf den Rohrdurchmesser sehr wenig variabel und erlauben zudem nur geringere Traglasten.

Bei den bekannten Rohrträgern mit hohem thermischen Isolierungsgrad (z.B. mit hohem Dampfdiffusionswiderstand) ergibt sich der Nachteil, dass es teilweise bei Befestigung der Rohrschelle und Kompression des Hohlzylinders zu einer ungünstigen Krafteinleitung und einer ungleichmäßigen Deformation des Rohrträgers kommen kann. Durch die ungleichmäßige Kompression kann es langfristig zu einem Verrutschen und einer Lockerung der Rohrschelle kommen. Zudem kann der Isoliergrad des Rohrträgers vermindert sein.

Eine Aufgabe der vorliegenden Erfindung ist es insofern, die Herstellung der bekannten Rohrträger zu verbessern, wobei insbesondere eine vorhersehbare Krafteinleitung und/oder eine gleichmäßige Deformation erreicht werden soll.

Eine weitere Aufgabe der Erfindung ist es, die Herstellungskosten bekannter Rohrträger zu reduzieren.

Diese Aufgaben werden durch den Rohrträger und das Verfahren nach den unabhängigen Ansprüchen zumindest teilweise oder vollständig gelöst. Optionale Ausführungsformen sind den abhängigen Ansprüchen zu entnehmen.

Gemäß einem ersten Aspekt betrifft die Erfindung einen Rohrträger zur Aufhängung und/oder Abstützung einer isolierten Rohrleitung, der sich entlang einer Längsachse erstreckt. Der Rohrträger weist einen Hohlzylinder aus, vorzugsweise geschlossenzelligem, Weichschaum, mindestens zwei Tragelemente aus Hartschaum, die in den Hohlzylinder eingesetzt sind, und mindestens ein oder mehrere Lastverteilelemente, die im Bereich der Tragelemente am Hohlzylinder befestigt sind, auf. Der Hartschaum ist ein PET-Hartschaum mit einer Dichte von mindestens 120 kg/m³, mindestens 140 kg/m³, mindestens 150 kg/m³ oder mindestens 180 kg/m³.

Der Weichschaum weist vorzugsweise einen höheren thermischen Isoliergrad als der Hartschaum auf und ist weicher als dieser. Beim verwendeten Weichschaum handelt es sich z.B. um einen Kautschukschaum.

Wie die Erfinder festgestellt haben, ergibt sich die ungünstige Deformation des Hohlzylinders häufig dadurch, dass es bei der Montage des Rohrträgers am jeweiligen Einbauort zu einer außermittigen Positionierung der Rohrschelle am Rohrträger kommt, woraus eine ungünstige Positionierung der Rohrschelle in Bezug auf die Tragelemente resultiert. Es wird angenommen, dass ein Grund hierfür die häufig geringe Länge der Rohrschelle in Richtung der Längsachse des Rohrträgers im Verhältnis zur Länge des Rohrträgers und/oder im Verhältnis zur Länge der Tragelemente in Richtung der Längsachse ist.

Bei Verwendung von Hartschaum der genannten Dichten lässt sich insbesondere bei Rohrträgern mit hohen Traglasten die Länge der Tragelemente, und somit auch die Länge des Rohrträgers insgesamt, erheblich reduzieren. Hierdurch wird eine Positionierung der Rohrschelle entlang der Längsachse gewährleistet oder zumindest gefördert, bei der die Rohrschelle die Mitte des Tragelements überlappt (insbesondere in einer Seitenansicht mit Blickachse senkrecht zur Längsachse).

Durch die Verringerung der Gesamtlänge des Rohrträgers lässt sich zudem die Menge an eingesetztem Weichschaum für den Hohlzylinder erheblich reduzieren, wodurch die Herstellungskosten gesenkt werden.

Der Rohrträger hat entlang der Längsachse eine Rohrträger-Länge L_{R}. Die Tragelemente haben entlang der Längsachse jeweils eine Tragelement-Länge L_{T}. Das Verhältnis L_{T}/L_{R} beträgt vorzugsweise höchstens 0,5 oder höchstens 0,45.

Der Rohrträger kann ferner eine Rohrschelle aufweisen und/oder zur Montage mittels einer solchen Rohrschelle vorgesehen sein. Die Rohrschelle umgreift und/oder kontaktiert vorzugsweise eine äußere Oberfläche des einen oder der mehreren Lastverteilelemente, insbesondere eine radial äußere Oberfläche. Die Rohrschelle kann eine Aufhängung zur Befestigung an einer Decke oder eine Stütze zur Abstützung auf einem Boden aufweisen.

Die Rohrschelle hat entlang der Längsachse des Rohrträgers eine Rohrschellen-Länge Ls, wobei die Rohrschellen-Länge Ls vorzugsweise mindestens 15 mm oder mindestens 20 mm beträgt. Vorzugsweise beträgt die Rohrschellen-Länge Ls weniger als 35 mm, stärker bevorzugt weniger als 30 mm.

Das Verhältnis L_{S}/L_{R} beträgt - in Verbindung mit den oben genannten Größen für das Verhältnis L_{T}/L_{R} oder auch unabhängig davon - vorzugsweise mindestens 0,3, mindestens 0,4 oder mindestens 0,5.

Das Verhältnis L_{S}/L_{T} beträgt - in Verbindung mit den oben genannten Größen für das Verhältnis L_{T}/L_{R} und/oder für das Verhältnis L_{S}/L_{R} oder auch unabhängig davon - vorzugsweise mindestens 0,6, mindestens 0,7, mindestens 0,8 oder mindestens 0,9.

Die genannten Größen für das Verhältnis L_{S}/L_{R} und/oder für das Verhältnis L_{S}/L_{T} und/oder für das Verhältnis L_{T}/L_{R} können insbesondere auch bei Rohrträgern mit einem Innendurchmesser von mindestens 5 cm, mindestens 6 cm oder mindestens 8 cm Anwendung finden.

Um ein Verrutschen der Rohrschelle gegenüber dem mindestens einen Lastverteilelement in Richtung der Längsachse zu begrenzen und weiter eine korrekte Montage der Rohrschelle zu fördern, ist entlang einer radial äußeren Oberfläche mindestens eines Lastverteilelements vorzugsweise mindestens eine Abrutschsicherung und/oder Zentrierung vorgesehen, die vorzugsweise als mindestens ein Anschlag ausgebildet ist. Vorzugsweise sind mindestens zwei Anschläge vorgesehen, um in beiden Richtungen entlang der Längsachse eine Zentrierung zu erreichen und/oder ein Verrutschen entlang der Längsachse in beiden Richtungen zu begrenzen.

Ein jeweiliger Anschlag wird vorzugsweise durch eine oder mehrere Noppen oder Vorsprünge gebildet, die entlang der äußeren Oberfläche des jeweiligen Lastverteilelements vorgesehen sind und von dieser nach außen vorstehen. Die Noppen oder Vorsprünge können in das jeweilige Lastverteilelement geprägt sein. Die Noppen oder Vorsprünge sind vorzugsweise vom Rand des Lastverteilelements beabstandet.

Alternativ können an dem mindestens einen Lastverteilelement bzw. an einem jeweiligen Lastverteilelement als Abrutschsicherung und/oder Zentrierung jedoch auch ein oder mehrere Sicken, Prägungen oder Nuten als jeweilige Anschläge vorgesehen sein, wenn eine für die Anwendung akzeptable Isolation erreicht wird.

Eine äußere Oberfläche des mindestens einen oder der mehreren Lastverteilelemente kann strukturiert oder aufgeraut sein. Insbesondere kann auf die äußere Oberfläche ein Strukturlack aufgebracht sein, insbesondere auf die radial äußere Oberfläche. Die äußere Oberfläche des einen Lastverteilelements oder der mehreren Lastverteilelemente ist vorzugsweise schwarz, grau oder anthrazit.

Die äußere Oberfläche des einen oder der mehreren Lastverteilelemente kann eine Rauheit Rₐ von mindestens 30 µm, mindestens 50 um oder mindestens 70 µm aufweisen.

Durch eine Strukturierung oder Aufrauhung der Oberfläche können Lichtreflektionen an dem jeweiligen Lastverteilelement minimiert werden, die nach Montage von Rohrträgern des Stands der Technik teilweise als störend empfunden werden. Zudem kann die Haftung der Rohrschelle auf dem Lastverteilelement verbessert werden, was einem Verrutschen weiter vorbeugt.

Gemäß einem zweiten Aspekt betrifft die Erfindung einen Rohrträger zur Aufhängung und/oder Abstützung einer isolierten Rohrleitung, der sich entlang einer Längsachse erstreckt. Der Rohrträger weist einen Hohlzylinder aus, vorzugsweise geschlossenzelligem, Weichschaum, mindestens zwei Tragelemente, die in den Hohlzylinder eingesetzt sind, und mindestens ein oder mehrere Lastverteilelemente, die im Bereich der Tragelemente am Hohlzylinder befestigt sind, auf. Der Rohrträger hat entlang der Längsachse eine Rohrträger-Länge L_{R}. Die Tragelemente haben entlang der Längsachse jeweils eine Tragelement-Länge L_{T}. Dabei ist/sind mindestens eine oder mehrere oder alle der folgenden Bedingungen erfüllt:
- das Verhältnis L_{T}/L_{R} beträgt höchstens 0,5 oder höchstens 0,45; und/oder
- der Rohrträger weist eine Rohrschelle auf, wobei die Rohrschelle entlang der Längsachse des Rohrträgers eine Rohrschellen-Länge Ls hat und das Verhältnis L_{S}/L_{R} mindestens 0,3, mindestens 0,4 oder mindestens 0,5 beträgt; und/oder
- der Rohrträger weist eine Rohrschelle auf, wobei die Rohrschelle entlang der Längsachse des Rohrträgers eine Rohrschellen-Länge Ls hat und das Verhältnis L_{S}/L_{T} mindestens 0,6, mindestens 0,7, mindestens 0,8 oder mindestens 0,9 beträgt.

Die Rohrschellen-Länge Ls beträgt vorzugsweise mindestens 15 mm oder mindestens 20 mm. Vorzugsweise beträgt die Rohrschellen-Länge Ls weniger als 35 mm, stärker bevorzugt weniger als 30 mm.

Ein Innendurchmesser des Rohrträgers und/oder ein Innendurchmesser des Hohlzylinders beträgt vorzugsweise mindestens 5 cm, mindestens 6 cm oder mindestens 8 cm.

Wie für den Fachmann verständlich sein wird, fördern auch die genannten Längenverhältnisse - unabhängig von dem für die Tragelemente verwendeten Material - eine Positionierung der Rohrschelle am Rohrträger, bei der die Rohrschelle mit der Mitte der Tragelemente überlappt.

Die Tragelemente können allerdings auch gemäß diesem Aspekt der Erfindung aus Hartschaum hergestellt sein oder bestehen, vorzugsweise aus einem PET-Hartschaum oder PU-Hartschaum. Vorzugsweise wird ein PET-Hartschaum mit einer Dichte von mindestens 120 kg/m³, mindestens 140 kg/m³, mindestens 150 kg/m³ oder mindestens 180 kg/m³ verwendet. Statt einem Hartschaum können jedoch auch andere Materialien zum Einsatz kommen, die eine ausreichende Tragkraft bereitstellen, z.B. Kork.

Der Weichschaum weist vorzugsweise einen höheren thermischen Isoliergrad als der Hartschaum auf und ist weicher als dieser. Beim verwendeten Weichschaum handelt es sich vorzugsweise um einen Kautschukschaum.

Wie für den ersten Aspekt erläutert, kann auch im Zusammenhang mit dem zweiten Aspekt entlang einer radial äußeren Oberfläche mindestens eines Lastverteilelements mindestens eine Abrutschsicherung und/oder Zentrierung vorgesehen sein, um ein Verrutschen der Rohrschelle gegenüber dem mindestens einen Lastverteilelement in Richtung der Längsachse zu begrenzen und weiter eine korrekte Montage der Rohrschelle zu fördern. Insofern wird auf die obigen Ausführungen verwiesen.

Wie ebenfalls für den ersten Aspekt erläutert, kann auch im Zusammenhang mit dem zweiten Aspekt eine äußere Oberfläche des mindestens einen oder der mehreren Lastverteilelemente strukturiert oder aufgeraut sein, insbesondere mittels eines Strukturlacks. Die äußere Oberfläche des einen oder der mehreren Lastverteilelemente kann dadurch eine Rauheit Ra von mindestens 30 µm, mindestens 50 µm oder mindestens 70 µm aufweisen. Auch in dieser Hinsicht wird auf die obigen Ausführungen verwiesen.

Gemäß einem dritten Aspekt betrifft die Erfindung einen Rohrträger zur Aufhängung und/oder Abstützung einer isolierten Rohrleitung, der sich entlang einer Längsachse erstreckt. Der Rohrträger weist einen Hohlzylinder aus, vorzugsweise geschlossenzelligem, Weichschaum, mindestens zwei Tragelemente aus Hartschaum, die in den Hohlzylinder eingesetzt sind, und mindestens ein oder mehrere Lastverteilelemente, die im Bereich der Tragelemente am Hohlzylinder befestigt sind, auf. Entlang einer radial äußeren Oberfläche mindestens eines oder mehrerer der Lastverteilelemente ist mindestens eine Abrutschsicherung und/oder Zentrierung vorgesehen.

Wie für den Fachmann verständlich sein wird, wird hierdurch - auch unabhängig von dem für die Tragelemente verwendeten Material und/oder den Längenverhältnissen des Rohrträgers - eine Positionierung der Rohrschelle an einer Position entlang der Längsachse gefördert, bei der die Rohrschelle mit der Mitte der Tragelemente überlappt (insbesondere in einer Draufsicht und/oder einer Seitenansicht mit Blickrichtung senkrecht zur Längsachse). Zudem wird ein Verrutschen der Rohrschelle gegenüber dem mindestens einen Lastverteilelement in Richtung der Längsachse begrenzt.

Die Abrutschsicherung und/oder Zentrierung ist vorzugsweise als mindestens ein Anschlag ausgebildet. Vorzugsweise sind mindestens zwei Anschläge vorgesehen, um in beiden Richtungen entlang der Längsachse eine Zentrierung zu erreichen und/oder ein Verrutschen entlang der Längsachse in beiden Richtungen zu begrenzen.

Ein jeweiliger Anschlag wird vorzugsweise durch eine oder mehrere Noppen oder Vorsprünge gebildet, die entlang der äußeren Oberfläche des jeweiligen Lastverteilelements vorgesehen ist/sind und von dieser nach außen vorstehen. Die Noppen oder Vorsprünge können in das jeweilige Lastverteilelement geprägt sein. Die Noppen oder Vorsprünge sind vorzugsweise vom Rand des Lastverteilelements beabstandet.

Alternativ können an dem mindestens einen Lastverteilelement bzw. an einem jeweiligen Lastverteilelement als Abrutschsicherung und/oder Zentrierung ein oder mehrere Sicken, Prägungen oder Nuten als jeweilige Anschläge vorgesehen sein.

Die Tragelemente können auch in Zusammenhang mit dem dritten Aspekt aus Hartschaum hergestellt sein oder bestehen, vorzugsweise aus einem PET-Hartschaum oder PU-Hartschaum. Vorzugsweise wird ein PET-Hartschaum mit einer Dichte von mindestens 120 kg/m³, mindestens 140 kg/m³, mindestens 150 kg/m³ oder mindestens 180 kg/m³ verwendet. Statt einem Hartschaum können jedoch auch andere Materialien zum Einsatz kommen, die eine ausreichende Tragkraft bereitstellen, z.B. Kork.

Der Weichschaum weist vorzugsweise einen höheren thermischen Isoliergrad als der Hartschaum auf und ist weicher als dieser. Beim verwendeten Weichschaum handelt es sich vorzugsweise um einen Kautschukschaum.

Der Rohrträger hat entlang der Längsachse eine Rohrträger-Länge L_{R}. Die Tragelemente haben entlang der Längsachse jeweils eine Tragelement-Länge L_{T}. Das Verhältnis L_{T}/L_{R} beträgt vorzugsweise höchstens 0,5 oder höchstens 0,45.

Der Rohrträger kann ferner eine Rohrschelle aufweisen und/oder zur Montage mittels einer solchen Rohrschelle vorgesehen sein. Die Rohrschelle hat entlang der Längsachse des Rohrträgers eine Rohrschellen-Länge Ls, wobei die Rohrschellen-Länge Ls vorzugsweise mindestens 15 mm oder mindestens 20 mm beträgt. Vorzugsweise beträgt die Rohrschellen-Länge Ls weniger als 35 mm, stärker bevorzugt weniger als 30 mm.

Das Verhältnis L_{S}/L_{R} beträgt - in Verbindung mit den oben genannten Größen für das Verhältnis L_{T}/L_{R} oder auch unabhängig davon - vorzugsweise mindestens 0,3, mindestens 0,4 oder mindestens 0,5. Das Verhältnis L_{S}/L_{T} beträgt - in Verbindung mit den oben genannten Größen für das Verhältnis L_{T}/L_{R} und/oder für das Verhältnis L_{S}/L_{R} oder auch unabhängig davon - vorzugsweise mindestens 0,6, mindestens 0,7, mindestens 0,8 oder mindestens 0,9. Die genannten Größen für das Verhältnis L_{S}/L_{R} und/oder für das Verhältnis L_{S}/L_{T} und/oder für das Verhältnis L_{T}/L_{R} können insbesondere auch bei Rohrträgern mit einem Innendurchmesser von mindestens 5 cm, mindestens 6 cm oder mindestens 8 cm Anwendung finden.

Wie für den ersten Aspekt erläutert, kann auch im Zusammenhang mit dem dritten Aspekt eine äußere Oberfläche des mindestens einen oder der mehreren Lastverteilelemente strukturiert oder aufgeraut sein, insbesondere mittels eines Strukturlacks. Die äußere Oberfläche des einen oder der mehreren Lastverteilelemente kann dadurch eine Rauheit Ra von mindestens 30 µm, mindestens 50 µm oder mindestens 70 µm aufweisen. In dieser Hinsicht wird auf die obigen Ausführungen verwiesen.

Gemäß einem vierten Aspekt betrifft die Erfindung einen Rohrträger zur Aufhängung und/oder Abstützung einer isolierten Rohrleitung, der sich entlang einer Längsachse erstreckt. Der Rohrträger weist einen Hohlzylinder aus, vorzugsweise geschlossenzelligem, Weichschaum, mindestens zwei Tragelemente aus Hartschaum, die in den Hohlzylinder eingesetzt sind, und mindestens ein oder mehrere Lastverteilelemente, die im Bereich der Tragelemente am Hohlzylinder befestigt sind, auf. Eine äußere Oberfläche des mindestens einen oder der mehreren Lastverteilelemente ist strukturiert oder aufgeraut, wobei
- auf die äußere Oberfläche ein Strukturlack aufgebracht ist; und/oder
- die äußere Oberfläche eine Rauheit Rₐ von mindestens 30 µm, mindestens 50 µm oder mindestens 70 µm aufweist.

Durch eine Strukturierung oder Aufrauhung der Oberfläche können Lichtreflektionen an dem jeweiligen Lastverteilelement minimiert werden, die nach Montage von Rohrträgern des Stands der Technik teilweise als störend empfunden werden.

Bei der äußeren Oberfläche kann es sich insbesondere um eine radial äußere Oberfläche des jeweiligen Lastverteilelements handeln.

Die äußere Oberfläche ist vorzugsweise schwarz, anthrazit oder grau.

Die Tragelemente können auch in Zusammenhang mit dem vierten Aspekt aus Hartschaum hergestellt sein oder bestehen, vorzugsweise aus einem PET-Hartschaum oder PU-Hartschaum. Vorzugsweise wird ein PET-Hartschaum mit einer Dichte von mindestens 120 kg/m³, mindestens 140 kg/m³, mindestens 150 kg/m³ oder mindestens 180 kg/m³ verwendet. Statt einem Hartschaum können jedoch auch andere Materialien zum Einsatz kommen, die eine ausreichende Tragkraft bereitstellen, z.B. Kork.

Der Weichschaum weist vorzugsweise einen höheren thermischen Isoliergrad als der Hartschaum auf und ist weicher als dieser. Beim verwendeten Weichschaum handelt es sich vorzugsweise um einen Kautschukschaum.

Der Rohrträger hat entlang der Längsachse eine Rohrträger-Länge L_{R}. Die Tragelemente haben entlang der Längsachse jeweils eine Tragelement-Länge L_{T}. Das Verhältnis L_{T}/L_{R} beträgt vorzugsweise höchstens 0,5 oder höchstens 0,45.

Der Rohrträger kann ferner eine Rohrschelle aufweisen und/oder zur Montage mittels einer solchen Rohrschelle vorgesehen sein. Die Rohrschelle hat entlang der Längsachse des Rohrträgers eine Rohrschellen-Länge Ls, wobei die Rohrschellen-Länge vorzugsweise mindestens 15 mm oder mindestens 20 mm beträgt. Vorzugsweise beträgt die Rohrschellen-Länge Ls weniger als 35 mm, stärker bevorzugt weniger als 30 mm.

Das Verhältnis L_{S}/L_{R} beträgt - in Verbindung mit den oben genannten Größen für das Verhältnis L_{T}/L_{R} oder auch unabhängig davon - vorzugsweise mindestens 0,3, mindestens 0,4 oder mindestens 0,5. Das Verhältnis L_{S}/L_{T} beträgt - in Verbindung mit den oben genannten Größen für das Verhältnis L_{T}/L_{R} und/oder für das Verhältnis L_{S}/L_{R} oder auch unabhängig davon - vorzugsweise mindestens 0,6, mindestens 0,7, mindestens 0,8 oder mindestens 0,9. Die genannten Größen für das Verhältnis L_{S}/L_{R} und/oder für das Verhältnis L_{S}/L_{T} und/oder für das Verhältnis L_{T}/L_{R} können insbesondere auch bei Rohrträgern mit einem Innendurchmesser von mindestens 5 cm, mindestens 6 cm oder mindestens 8 cm Anwendung finden.

Wie oben erläutert, kann auch im Zusammenhang mit dem vierten Aspekt entlang einer radial äußeren Oberfläche mindestens eines Lastverteilelements mindestens eine Abrutschsicherung und/oder Zentrierung vorgesehen sein, um ein Verrutschen der Rohrschelle gegenüber dem mindestens einen Lastverteilelement in Richtung der Längsachse zu begrenzen und weiter eine korrekte Montage der Rohrschelle zu fördern. Insofern wird auf die obigen Ausführungen verwiesen.

Die Tragelemente sind (bei allen vorgenannten Aspekten) vorzugsweise als Ringsegmente ausgebildet.

Der Hohlzylinder ist (bei allen vorgenannten Aspekten) vorzugsweise entlang mindestens eines Schlitzes geöffnet. Vorzugsweise weist der Hohlzylinder eine erste Stirnseite, eine zweite Stirnseite und eine sich zwischen der ersten Stirnseite und der zweiten Stirnseite erstreckende Zylinderwand auf, die sich entlang der Längsachse erstreckt. Der Schlitz erstreckt sich vorzugsweise von der ersten Stirnseite zur zweiten Stirnseite und/oder von einer äußeren Mantelfläche zu einer inneren Mantelfläche des Hohlzylinders. Der Hohlzylinder stellt vorzugsweise eine Durchgangsöffnung bereit, in die das zu tragende Rohr aufgenommen werden kann. Der Hohlzylinder kann entlang des Schlitzes geöffnet werden, um den Rohrträger auf das Rohr zu stecken.

Der Hohlzylinder kann durch ein einziges (bis auf den Schlitz) durchgehendes Hohlzylindersegment oder aus mehreren Hohlzylindersegmenten gebildet sein. Sowohl durchgehende als auch separate Hohlzylindersegmente lassen sich vorteilhaft durch Stückelung eines Schlauchs oder Schneiden aus einer Platte herstellen.

Das mindestens eine oder die mehreren Lastverteilelemente kann/können auch als Lastverteilschalen bezeichnet werden. Das mindestens eine oder die mehreren Lastverteilelemente sind vorzugsweise aus Kunststoff oder Metall ausgebildet, z.B. aus Blech, insbesondere aus gebogenem Blech.

Das mindestens eine Lastverteilelement wird vorzugsweise auf den Hohlzylinder geklebt.

Die Zellen des Weichschaums können (bei allen vorgenannten Aspekten) entlang einer äußeren Mantelfläche des Hohlzylinders freiliegen, wodurch eine bessere Fixierung des mindestens einen Lastverteilelements auf dem Hohlzylinder erreicht werden kann. Dabei wird angenommen, dass die freiliegende Zellstruktur entlang der äußeren Mantelfläche des Hohlzylinders eine bessere Verankerung eines zur Anbringung des einen der der mehreren Lastverteilelemente verwendeten Klebers ermöglicht. Vorzugsweise ist das mindestens eine Lastverteilelement unmittelbar auf die freiliegenden und/oder geöffneten Zellen des Hohlzylinders geklebt.

Die Zellen des Weichschaums lassen sich besonders einfach freilegen, wenn das durchgehende oder die separaten Hohlzylindersegmente aus einer Platte geschnitten werden. Darüber hinaus lassen sich durch ein solches Schneiden die Fertigungstoleranzen bei der Herstellung der Hohlzylinder reduzieren, was ein gleichmäßigeres Anliegen des Hohlzylinders an dem mindestens einen bzw. den mehreren Lastverteilelementen fördert. Es wird angenommen, dass auch dies die Haftung der Lastverteilelemente am Hohlzylinder begünstigt und/oder einem späteren Ablösen vorbeugt. Die geringeren Fertigungstoleranzen vereinfachen zudem die Automatisierung nachfolgender Fertigungsschritte. Das eine durchgehende Hohlzylindersegment oder die mehreren Hohlzylindersegmente, die gemeinsam einen Hohlzylinder bilden, können auch als Hohlzylinder-Rohlinge bezeichnet werden.

Unter einem Schneiden ist vorzugsweise auch ein Aussägen, ein Ausstanzen und/oder ein Ausfräsen des mindestens einen Hohlzylindersegments oder der mehreren Hohlzylindersegmente aus der jeweiligen Platte zu verstehen. Vorzugsweise wird das mindestens eine Hohlzylindersegment oder die mehreren Hohlzylindersegmente mittels einer Drahtschneidmaschine ausgeschnitten. Alternativ kann jedoch auch eine Wasserstrahlschneidmaschine, eine Fräsmaschine, ein Cutter (Schneidmesser) oder eine Bandsäge verwendet werden. Ein solches Schneiden, Ausstanzen und/oder Ausfräsen kann z.B. mittels CNC-Technik erfolgen.

Um das eine oder die mehreren Hohlzylindersegmente aus der einen oder den mehreren Platten zu schneiden, werden die eine oder die mehreren Platten vorzugsweise entlang ihrer jeweiligen ersten und/oder entlang ihrer jeweiligen zweiten Hauptfläche abgestützt. Als vorteilhaft hat sich erwiesen, die eine oder die mehreren Platten auf ihre jeweilige erste oder ihre jeweilige zweite Hauptfläche zu legen. Insbesondere können die eine oder die mehreren Platten horizontal angeordnet werden. Eine horizontale oder im Wesentlichen horizontale Anordnung der Platte stellt sicher, dass das Hohlzylindersegment oder die Hohlzylindersegmente auch nach dem Schneiden an Ort und Stelle in der Platte verbleiben. Die Segmente sind daher an einer vorbestimmten Position angeordnet und können nach dem Schneiden einfach entnommen werden, insbesondere auch automatisiert (etwa durch einen Roboter). Dem Fachmann wird jedoch verständlich sein, dass dies auch bei einer Anordnung erreicht werden kann, bei der ein bestimmter Winkel nicht überschritten wird, etwa einer Anordnung der ersten und/oder zweiten Hauptfläche der jeweiligen Platte in einem Winkel zur Horizontalen von weniger als 75°, weniger als 50° oder weniger als 30°.

Bei Abstützung der Platte entlang derjeweiligen ersten und/oder zweiten Hauptfläche stellt sich ein Schnitt durch die Platte mit den vorgenannten Schneidmaschinen unter Umständen als schwierig dar. Um dies zu vereinfachen, wird die jeweilige Platte vorzugsweise entlang der jeweiligen Hauptfläche auf mindestens zwei Förderbändern abgestützt. Zwischen den mindestens zwei Förderbändern ist vorzugsweise ein Spalt ausgebildet. Die Schneidmaschine kann die Platte dann im Bereich dieses Spalts schneiden, wobei die Platte durch die Förderbänder hin und her bewegt werden kann, um die unterschiedlichen Bereiche der Platte zu bearbeiten. Die Platte kann jedoch - wie für den Fachmann erkennbar sein wird - selbstverständlich jedoch auch auf andere Weise geschnitten und/oder bewegt werden.

Ein Schneidmittel der Schneidmaschine (etwa ein Draht, ein Wasserstrahl, ein Stanzwerkzeug, ein Fräser, ein Schneidmesser oder eine Bandsäge) wird vorzugsweise durch den Spalt zwischen den mindestens zwei Förderbändern geführt. Das Schneidmittel wird vorzugsweise so geführt, dass es erst durch die jeweilige Platte schneidet und dann durch den Spalt verläuft. Dies kann verhindern, dass die geschnittenen Hohlzylindersegmente durch das Schneidmittel unbeabsichtigt aus der Platte gezogen werden.

In anderen Worten wird das Schneidmittel zur Ausführung des Schnitts durch die Platte vorzugsweise entgegen einer Richtung bewegt, die von der Hauptfläche, entlang der die jeweilige Platte abgestützt ist (z.B. auf den mindestens zwei Förderbändern), zur gegenüberliegenden Hauptfläche weist.

Bei horizontaler oder im Wesentlichen horizontaler Anordnung der einen oder der mehreren Platten wird die Platte bzw. werden die Platten vorzugsweise mittels einer Schneidmaschine geschnitten, die einen Schnitt vertikal oder im Wesentlichen vertikal durch die Platte ausführt. Das Schneidmittel verläuft somit zur Ausführung eines Schnitts vertikal oder im Wesentlichen vertikal, stärker bevorzugt vertikal oder im Wesentlichen vertikal nach unten. So kann der Draht der Drahtschneidmaschine z.B. so gedreht werden, dass er zum Schneiden abwärts durch die Platte bewegt wird, insbesondere vertikal nach unten. Entsprechendes gilt für das Band der Bandsäge, das Wasser der Wasserstrahlschneidmaschine, das Stanzwerkzeug oder den Fräser. Bei diesen Verfahren kann der Hohlzylinder mit geringer Toleranz (deutlich geringer als bei einem Rohr) mit einem runden Querschnitt hergestellt werden. Alternativ kann der Hohlzylinder jedoch auch mit einem nicht-runden Querschnitt aus der Platte geschnitten werden, z.B. mit einem ovalen, quadratischen oder rechteckigen Querschnitt. Je nach Form von Rohr und Rohrschelle kann hierdurch die Abdichtung verbessert und/oder die Krafteinleitung optimiert werden. Der Hohlzylinder kann insofern auch als Prisma mit einem Durchgangsloch, das sich von der ersten zur gegenüberliegenden zweiten Stirnfläche des Prismas erstreckt, betrachtet werden.

Die Platte weist eine Plattenbreite und eine Plattentiefe auf, wobei die Plattendicke vorzugsweise kleiner als die Plattenbreite und die Plattentiefe ist. Der Hohlzylinder wird vorzugsweise so aus der Platte geschnitten, dass dessen Längsachse parallel zur Plattendicke ist. Es können eine Vielzahl von Hohlzylindersegmenten aus einer Platte geschnitten werden. Die Plattendicke beträgt hierbei vorzugsweise mindestens 0,5 cm, mindestens 1 cm, mindestens 2 cm, mindestens 4 cm oder mindestens 5 cm. Bezogen auf den Hohlzylinder ist dieser in Richtung der Längsachse vorzugsweise mindestens 2 cm, mindestens 4 cm oder mindestens 5 cm lang. Die Plattendicke beträgt vorzugsweise höchstens 20 cm, höchstens 15 cm oder höchstens 10 cm. Bezogen auf den Hohlzylinder ist dieser somit in Richtung der Längsachse vorzugsweise höchstens 20 cm, höchstens 15 cm oder höchstens 10 cm lang.

Um das Schneiden der Hohlzylinder aus derartigen Weichschaum-Platten (insbesondere derartigen Weichschaumplatten mit begrenzter Plattendicke) zu vereinfachen, kann die Platte vor und/oder beim Schneiden temperiert (insbesondere gekühlt) werden. So kann die Platte z.B. in einer Kühlkammer gelagert oder in einer Kühlkammer bearbeitet werden. Bei Verwendung einer Drahtschneidmaschine kann diese z.B. in einer solchen Kühlkammer angeordnet sein oder über eine solche Kühlkammer verfügen.

Vorzugsweise werden die eine oder die mehreren Platten auf eine Temperatur unter 25 °C, stärker bevorzugt auf eine Temperatur unter 15 °C temperiert. Die Temperatur liegt vorzugsweise über -50 °C, stärker bevorzugt über -10 °C.

Alternativ oder zusätzlich kann die Platte, z.B. zur Versteifung, in Richtung der Plattendicke aus mehreren Lagen gebildet sein. Die einzelnen Lagen können mittels Klebetechnik miteinander verbunden sein. Die verschiedenen Lagen sind vorzugsweise jeweils aus einem Weichschaum ausgebildet, vorzugsweise jeweils aus einem geschlossenzelligen Weichschaum, insbesondere als eine jeweilige Weichschaumplatte. Dabei kann für mehrere oder alle Lagen derselbe Weichschaum verwendet werden. Alternativ können die Lagen aus verschiedenen Materialien mit unterschiedlichen Wärmeleitkoeffizienten und/oder unterschiedlichen Schallabsorptionskoeffizienten ausgebildet sein, insbesondere aus verschiedenen geschlossenzelligen Weichschäumen.

Die Dicke von Weichschaumplatten kann unter Umständen einer relativ hohen Toleranz unterliegen, was sich in einer uneinheitlichen Länge der Hohlzylinder-Rohlinge widerspiegeln könnte. Zur Verringerung der Längentoleranz der Rohlinge und/oder der Bestimmung von deren Länge kann die Dicke der mehrlagigen, verklebten Platte nach Verkleben der einzelnen Lagen (insbesondere nach Verkleben der einzelnen Weichschaumplatten) eingestellt werden. Hierfür wird die mehrlagig Platte vorzugsweise quer zur Dickenrichtung (also parallel zur ersten und/oder zweiten Hauptfläche) geschnitten, z.B. mittels einer Drahtschneidmaschine, einer Wasserstrahlschneidmaschine oder einer Bandsäge.

Der hergestellte Hohlzylinder kann somit in Richtung der Längsachse aus mehreren Lagen gebildet sein, wobei die einzelnen Lagen vorzugsweise hohlzylinderförmig sind und/oder dem Querschnitt des Hohlzylinders entsprechen. Diese Lagen können mittels Klebetechnik miteinander verbunden sein. Die Lagen können aus dem gleichen Weichschaum bestehen (insbesondere dem gleichen geschlossenzelligen Weichschaum) oder aber auch unterschiedliche Wärmeleitkoeffizienten und/oder Schallabsorptionskoeffizienten haben.

Die Zellen des Weichschaums des Hohlzylinders können auch entlang einer inneren Mantelfläche der Zylinderwand freiliegen und/oder geöffnet sein.

Das oder die Hohlzylindersegmente werden vorzugsweise so ausgeschnitten, dass die erste Hauptfläche der Platte die erste Stirnseite und/oder eine zweite Hauptfläche der Platte die zweiten Stirnseite bildet. Die erste Hauptfläche und/oder die zweite Hauptfläche sind optional mit einer Haut ausgebildet, welche die jeweilige Hauptfläche zumindest abschnittsweise oder vollständig bedeckt. Die Zellstruktur des Weichschaums tritt entlang der ersten Hauptfläche und/oder entlang der zweiten Hauptfläche daher optional nicht offen zutage. Die erste Stirnseite und/oder die zweite Stirnseite weisen dann eine Außenhaut auf. Die Zellen des, vorzugsweise geschlossenzelligen, Weichschaums liegen in diesem Fall entlang der ersten Stirnseite und/oder entlang der zweiten Stirnseite nicht frei. In diesem Fall tritt die Zellstruktur des Weichschaums im Bereich der ersten und/oder zweiten Stirnfläche vorzugsweise nicht offen zutage.

Der Schlitz des Hohlzylinders verläuft vorzugsweise parallel zur Längsachse und/oder von der inneren Mantelfläche bis zur äußeren Mantelfläche. Der Schlitz kann während des Schneidens eines durchgehenden Hohlzylindersegments aus der Platte eingebracht werden, was einen nachträglichen Herstellungsschritt vermeidet. Alternativ kann der Schlitz auch in einem nachträglichen Schritt eingebracht werden.

Um die Befestigung des Rohrträgers am Rohr zu vereinfachen, ist (bei allen vorgenannten Aspekten) im Bereich des Schlitzes vorzugsweise ein Kleber, insbesondere ein Haftkleber vorgesehen, z.B. in Form eines doppelseitigen Klebebands. Der Hohlzylinder kann so durch Zusammendrücken der entlang des Schlitzes getrennten Flächen der Zylinderwand dampfdicht verschlossen werden. Um den Haftkleber vor der endgültigen Montage zu schützen, ist dieser vorzugsweise mit einer abziehbaren Folie versehen. Die abziehbare Folie weist vorzugsweise eine über die Zylinderwand und/oder über mindestens eine der Stirnseiten vorstehende Lasche auf, die durch einen Monteur mit einer Hand ergriffen werden kann, um die Folie abzuziehen (insbesondere werkzeuglos) und den Haftkleber bzw. die Klebefläche des doppelseitigen Klebebands freizulegen.

Die Durchgangsöffnung des Hohlzylinders verläuft vorzugsweise parallel zur Längsachse und/oder von der ersten Stirnfläche zur zweiten Stirnfläche. Die Durchgangsöffnung kann während des Schneidens des Hohlzylinder-Rohlings aus der Platte eingebracht werden. Alternativ kann die Durchgangsöffnung auch in einem nachträglichen Schritt eingebracht werden.

Vorzugsweise erstreckt sich nicht mehr als ein Schlitz von der ersten Stirnseite zur zweiten Stirnseite und von der inneren Mantelfläche zur äußeren Mantelfläche. Der Hohlzylinder ist dann in Umfangsrichtung aus einem einzelnen einheitlichen und/oder durchgehenden Segment ausgebildet. Je nach Anwendungsbereich können aber auch mehrere Schlitze vorgesehen sein, sodass der Hohlzylinder in Umfangsrichtung mehrere getrennte Segmente aufweist, die vorzugsweise miteinander verklebt oder miteinander verklebbar sind. So kann der Hohlzylinder beispielsweise in Umfangsrichtung aus zwei getrennten Segmenten bestehen.

Die Tragelemente werden (bei allen vorgenannten Aspekten) vorzugsweise jeweils in ein im Hohlzylinder ausgebildetes Fenster eingesetzt. Das jeweilige Fenster erstreckt sich vorzugsweise durch die Zylinderwand hindurch, vorzugsweise quer zur Längsrichtung. In anderen Worten erstreckt sich das Fenster vorzugsweise von der inneren Mantelfläche bis zur äußeren Mantelfläche.

Das jeweilige Fenster kann als eine ringsegmentförmige Öffnung ausgebildet sein.

Das mindestens eine Lastverteilelement oder die mehreren Lastverteilelemente sind (bei allen vorgenannten Aspekten) vorzugsweise jeweils kreissegmentförmig ausgebildet. Dabei kann sich das jeweilige Lastverteilelement um einen Mittelpunktswinkel von mindestens 120°, mindestens 150° oder mindestens 170° erstrecken. Eine geringere Fertigungstoleranz ist hilfreich, um über diese Winkel hinweg eine gleichmäßige Anlage des Hohlzylinders an dem Lastverteilelement zu erreichen, ohne dass der Hohlzylinder hierfür (unter der Einbringung von Spannungen) verformt werden muss.

Der Rohrträger (bei allen vorgenannten Aspekten) verfügt vorzugsweise über zwei kreissegmentförmige Lastverteilelemente, die auf die äußere Mantelfläche des Hohlzylinders aufgebracht sind, insbesondere aufgeklebt (vorzugsweise direkt auf die freiliegende Zellstruktur). Dabei ist vorzugsweise jeweils ein Lastverteilelement einem jeweiligen Tragelement zugeordnet, sodass die in das Tragelement eingeleitete Kraft über die Kraftverteilschale auf eine Rohrschelle übertragen werden kann. Das mindestens eine oder die mehreren Lastverteilelemente können aus Kunststoff oder Blech hergestellt sein.

Gemäß einem weiteren Aspekt bezieht sich die Erfindung auf eine Rohrleitung mit einem erfindungsgemäßen Rohrträger.

Bevorzugte Ausführungsformen der Erfindung werden nachfolgend unter Bezugnahme auf die Zeichnungen beispielhaft beschrieben. Es handelt sich dabei lediglich um schematische Darstellungen, die häufig zur Verdeutlichung bestimmter Aspekte andere (optionale) Strukturen nicht darstellen oder aber auch verschiedene optionale, miteinander einhergehende Aspekte in einer Darstellung berücksichtigen. Gleiche Bezugszeichen weisen in diesem Zusammenhang auf äquivalente, ähnliche, vergleichbare oder gleiche Bauteile in den dargestellten Ausführungsformen hin.

Die gezeigten Ausführungsformen können innerhalb des Schutzumfangs der Ansprüche in vielerlei Hinsicht verändert werden. Die Offenbarung der Figuren soll den Schutzumfang der Erfindung daher nicht beschränken. Dabei ist zu beachten, dass die Merkmale der obengenannten Ausführungsformen und Aspekte in einer einzigen Ausführungsform kombiniert werden können. Ausführungsformen oder Aspekte der Erfindung können daher je nach Ausgestaltung alle oder nur einige der obengenannten Merkmale aufweisen. Es zeigen:
- **Fig. 1**: eine schematische, perspektivische Darstellung eines erfindungsgemäßen Rohrträgers;
- **Fig. 2**: ein schematischer Schnitt durch den Rohrträger von Fig. 1;
- **Fig. 3**: eine schematische Seitenansicht des Rohrträgers von Fig. 1 und 2;
- **Fig. 4**: eine schematische Darstellung eines Herstellungsverfahrens für erfindungsgemäße Rohrträger;
- **Fig. 5**: eine schematische, perspektivische Darstellung einer Platte und der aus der Platte im Rahmen des Verfahrens nach Fig. 4 auszuschneidenden Hohlzylinder-Rohlinge;
- **Fig. 6**: eine schematische, perspektivische Darstellung eines Hohlzylinders für einen erfindungsgemäßen Rohrträger;
- **Fig. 7**: eine schematische, perspektivische Darstellung eines Hohlzylinders für einen Rohrträger gemäß einer weiteren Variante;
- **Fig. 8**: eine schematische, perspektivische Darstellung eines Blocks aus mehreren Platten.

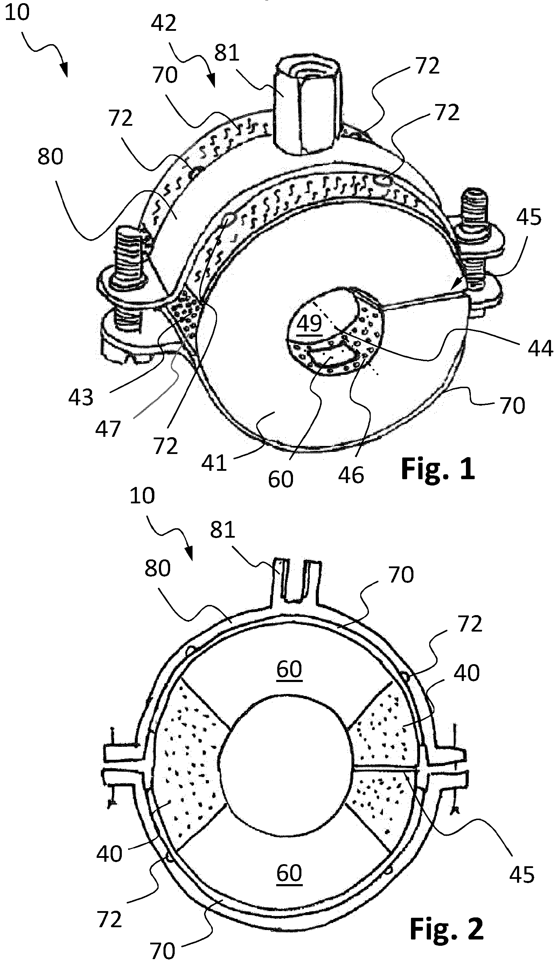

Fig. 1 bis 3 zeigen beispielhaft einen erfindungsgemäßen Rohrträger 10 zur Aufhängung oder Abstützung einer isolierten Rohrleitung (nicht gezeigt).

Der Rohrträger 10 weist einen Hohlzylinder 40 aus Weichschaum auf, der sich entlang einer gemeinsamen Längsachse 44 des Rohrträgers 10 und des Hohlzylinders 40 erstreckt. Der Hohlzylinder erstreckt sich von einer ersten Stirnseite 41 zu einer zweite Stirnseite 42. Zwischen der ersten Stirnseite 41 und der zweiten Stirnseite 42 erstreckt sich eine Zylinderwand 43 des Hohlzylinders 40, die entlang eines Schlitzes 45 durchbrochen ist. Der Schlitz 45 erstreckt sich dabei von der ersten Stirnfläche 41 bis zur zweiten Stirnfläche 42 und von einer inneren Mantelfläche 46 bis zu einer äußeren Mantelfläche 47 des Hohlzylinders 40, sodass die Rohrleitung durch den Schlitz 45 in eine Durchgangsöffnung 49 des Hohlzylinders 40 eingeführt werden kann. Der Hohlzylinder 40 kann insbesondere aus einem Kautschukschaum hergestellt sein.

Der Rohrträger 10 weist ferner ein unteres und ein oberes Lastverteilelement 70 auf, die entlang einer radial äußeren Oberfläche des Hohlzylinders 40 befestigt sind. Bei diesen Lastverteilelementen 70 handelt es sich vorzugsweise jeweils um ein dünnes Metallblech. Optional kann auch nur ein einziges Lastverteilelement 70 vorgesehen sein, z.B. ein durchgehendes Lastverteilelement. Das bzw. die Lastverteilelemente 70 können auch aus Kunststoff ausgebildet sein.

Der Rohrträger 10 weist ferner eine Rohrschelle 80 auf. Die Rohrschelle 80 umgreift eine radial äußere Oberfläche der Lastverteilelemente 70. Die Rohrschelle 80 drückt die Lastverteilelemente 70 zusammen und drückt so den Hohlzylinder 40 an die Rohrleitung. Die Rohrschelle 80 verfügt ferner über eine Aufhängung 81 zur Befestigung des Rohrträgers 10 an einer Decke (nicht gezeigt). Alternativ oder zusätzlich kann jedoch auch eine Abstützung vorgesehen sein (nicht gezeigt).

Das bzw. die Lastverteilelemente 70 weisen einen ersten Anschlag auf, um ein Verrutschen der Rohrschelle 80 entlang der Längsachse 44 nach vorne zu verhindern, und einen zweiten Anschlag, um ein Verrutschen der Rohrschelle 80 entlang der Längsachse 44 nach hinten zu verhindern. Der erste Anschlag wird dabei durch ein oder mehrere Noppen 72 (z.B. zwei Noppen 72) bereitgestellt, die entlang eines vorderen Endbereichs des jeweiligen Lastverteilelements 70 ausgebildet sind. Der zweite Anschlag wird entsprechend durch ein oder mehrere Noppen 72 (z.B. zwei weitere Noppen) bereitgestellt, die an einem hinteren Endbereich des jeweiligen Lastverteilelements 70 ausgebildet sind. Wie der Fachmann erkennen wird, kann es genügen, eines der beiden Lastverteilelemente 70 mit solchen Anschlägen zu versehen. Vorzugsweise verfügt jedoch jedes der vorhandenen Lastverteilelemente 70 über entsprechende Noppen 72.

Statt der einen oder mehreren Noppen kann alternativ eine Sicke, Prägung oder Nut entlang des Lastverteilelements vorgesehen sein (nicht gezeigt). Diese kann insbesondere in Umfangsrichtung verlaufen.

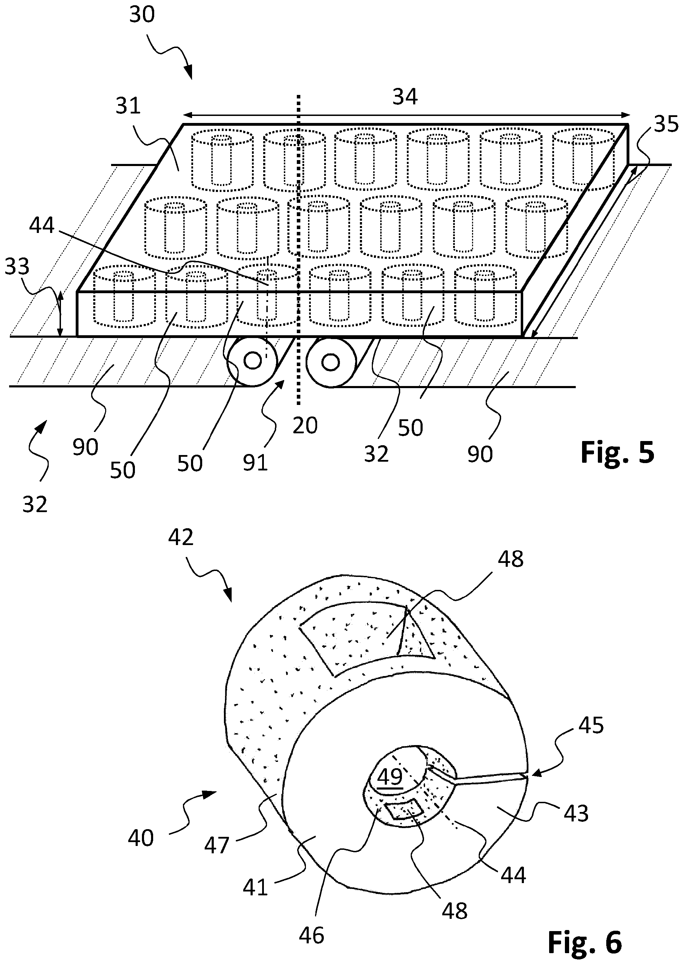

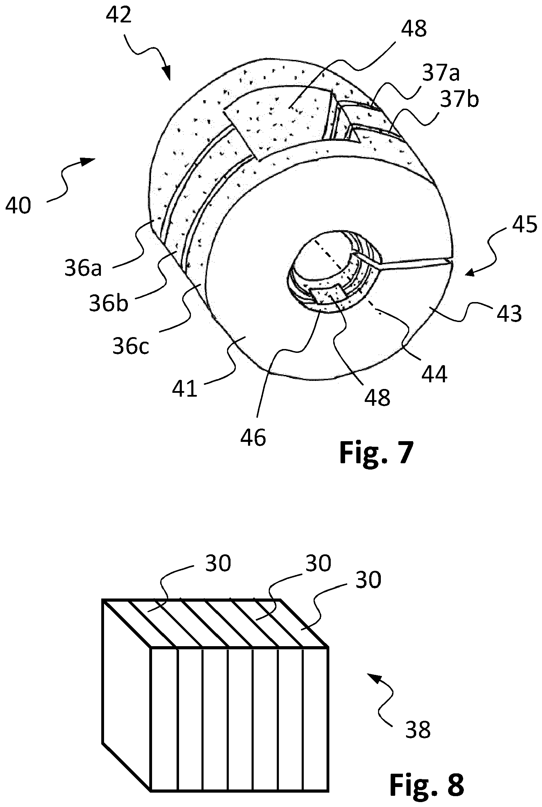

Wie insbesondere im Schnitt gemäß Fig. 2 zu erkennen ist, weist der Rohrträger 10 zwei Tragelemente 60 auf. Diese Tragelemente 60 können insbesondere als Ringsegmente ausgebildet sein. Die Tragelemente 60 sind hierbei jeweils in ein entsprechendes, ringsegmentförmiges Fester 48 des Hohlzylinders eingesetzt (siehe Fig. 6 und 7). Unter Umständen kann die Verwendung eines einzigen Tragelements bei bestimmten Anwendungen genügen.

Die Tragelemente 60 sind vorzugsweise aus einem Schaum ausgebildet, der härter als Schaum des Hohlzylinders 40 ist, insbesondere aus einem Hartschaum. Durch die Verwendung eines Schaums kann auch im Bereich der Tragelemente 60 eine ausreichende Isolierung erreicht werden.

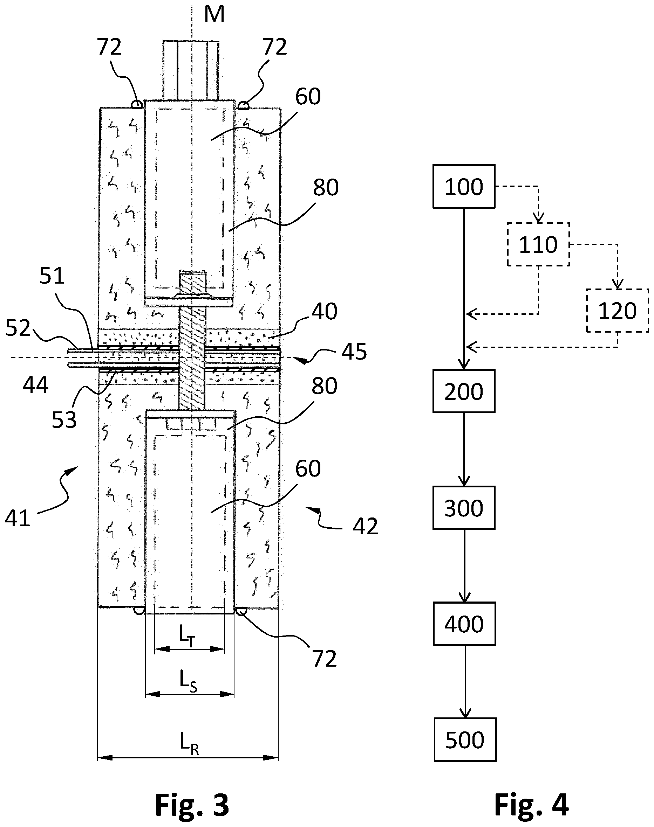

Insbesondere kann es sich bei diesem Hartschaum um einen PET-Hartschaum mit einer Dichte von mindestens 120 kg/m³, mindestens 140 kg/m³, mindestens 150 kg/m³ oder mindestens 180 kg/m³ handeln. Wie auch in der Seitenansicht nach Fig. 3 erkennbar ist, lässt sich durch die Verwendung eines solchen Schaums eine bessere Überlappung der Rohrschelle 80 mit der Mitte M der beiden Tragelemente 60 erreichen, weil die Gesamtlänge des Rohrträgers 10 erheblich reduziert wird.

Wie ferner in Fig. 3 schematisch dargestellt ist, hat der Rohrträger 10 entlang der Längsachse 44 eine Rohrträger-Länge L_{R}. Die Tragelemente 60 (in Fig. 3 verdeckt und daher gestrichelt angedeutet) haben entlang der Längsachse 44 jeweils eine Tragelement-Länge L_{T}. Das Verhältnis L_{T}/L_{R} beträgt vorzugsweise höchstens 0,5 oder höchstens 0,45.

Die Rohrschelle 10 hat entlang der Längsachse 44 eine Rohrschellen-Länge Ls, wobei die Rohrschellen-Länge Ls vorzugsweise mindestens 15 mm oder mindestens 20 mm beträgt. Vorzugsweise beträgt die Rohrschellen-Länge L_{S} weniger als 35 mm, stärker bevorzugt weniger als 30 mm. Das Verhältnis L_{S}/L_{R} beträgt vorzugsweise mindestens 0,3, mindestens 0,4 oder mindestens 0,5. Das Verhältnis L_{S}/L_{T} beträgt vorzugsweise mindestens 0,6, mindestens 0,7, mindestens 0,8 oder mindestens 0,9.

Wie ferner in Fig. 1 und 3 angedeutet wird, ist die radial äußere Oberfläche der Lastverteilelemente 70 vorzugsweise strukturiert oder aufgeraut. Durch eine Strukturierung oder Aufrauhung der Oberfläche können Lichtreflektionen an dem jeweiligen Lastverteilelement minimiert werden, die nach Montage von Rohrträgern des Stands der Technik teilweise als störend empfunden werden. Zudem kann so die Haftung der Rohrschelle auf den Lastverteilelementen 70 verbessert werden.

Die radial äußere Oberfläche des einen oder der mehreren Lastverteilelemente kann eine Rauheit Rₐ von mindestens 30 µm, mindestens 50 µm oder mindestens 70 µm aufweisen.

Zur Bereitstellung einer solchen Rauheit (oder auch einer anderen gewünschten Rauheit) kann auf die radial äußere Oberfläche der Lastverteilelemente 70 ein Strukturlack aufgebracht sein. Hierdurch lässt sich der Grad der Lichtreflektion und die Rauheit einfach einstellen.

Der Schlitz 45 wird verschlossen, indem die gegenüberliegenden Flächen der Zylinderwand 43 entlang des Schlitzes 45 zusammengedrückt werden. Der Hohlzylinder 40 weist entlang einer oder beider dieser gegenüberliegenden Flächen vorzugsweise einen Haftkleber 53 auf, der beispielsweise durch ein doppelseitiges Klebeband bereitgestellt werden kann. Um den Haftkleber 53 vor der endgültigen Montage zu schützen, ist entlang der bzw. den mit dem Haftkleber 53 versehenen Flächen vorzugsweise eine abziehbare Folie 51 vorgesehen, wie in Fig. 3 gezeigt. Die abziehbare Folie 51 weist vorzugsweise eine über die Zylinderwand 43 radial nach außen und/oder über mindestens eine der Stirnseiten 41, 42 vorstehende Lasche 52 auf, die durch einen Monteur mit einer Hand ergriffen werden kann, um die Folie oder die Folien 51 abzuziehen (insbesondere werkzeuglos) und den Haftkleber 53 freizulegen. Dies erlaubt eine einfache Fixierung des Rohrträgers 10 an der Rohrleitung vor Befestigung der Rohrschelle 80.

Der Hohlzylinder 40 des beispielhaft beschriebenen Rohrträgers 10 nach Fig. 1 bis 3 kann durch Stückelung eines Schlauchs aber auch durch Schneiden aus einer Platte hergestellt werden, wobei durch das Schneiden aus einer Platte weitere Vorteile erzielt werden können.

Fig. 4 und 5 zeigen beispielhaft und schematisch ein Verfahren zur Herstellung eines erfindungsgemäßen Rohrträgers.

Das Verfahren umfasst einen ersten Schritt 100 des Bereitstellens einer Platte aus geschlossenzelligem Weichschaum 30 (siehe Fig. 5), wobei die Platte eine erste Hauptfläche 31, eine gegenüberliegende zweite Hauptfläche 32 und eine sich zwischen der ersten Hauptfläche 31 und der zweiten Hauptfläche 32 erstreckende Plattendicke 33 hat. Die Plattendicke 33 ist dabei kleiner als eine Plattenbreite 34 und eine Plattentiefe 35 der Platte 30.

In einem zweiten Schritt 200 wird eine Vielzahl von Hohlzylindern oder Hohlzylindersegmenten, die nachfolgend auch als Hohlzylinder-Rohlinge 50 bezeichnet werden, aus der Platte hergestellt, insbesondere aus der Platte geschnitten (z.B. mindestens 10, mindestens 20 oder mindestens 50 Hohlzylinder-Rohlinge 50). Für eine effiziente Herstellung bietet sich hierbei insbesondere das Ausschneiden mittels einer Drahtschneidmaschine, einer Bandsäge oder ein Ausstanzen der Hohlzylinder-Rohlinge 50 an.

Bei Verwendung einer Drahtschneidmaschine verläuft der Draht in der Regel vertikal oder horizontal. Eine vertikale Drahtführung kann vorliegend vorteilhaft sein, weil die Rohlinge 50 dadurch beim Schneiden in der Platte 30 bleiben und anschließend automatisch entnommen werden können. In Fig. 5 ist mit dem Bezugszeichen 20 der Draht der Drahtschneidmaschine als gestrichelte Linie angedeutet.

Darüber hinaus sind zwei Förderbänder 90 gezeigt, auf denen die Platte 30 aufgelegt werden kann, in Fig. 5 beispielhaft entlang der zweiten Hauptfläche 32. Zwischen den Förderbändern 90 ist ein Spalt 91 vorgesehen, durch den der Draht 20 verläuft. Um im Wesentlichen aus dem gesamten Material der Platte 30 Hohlzylinder-Rohlinge 40 schneiden zu können, wird die Platte 30 vorzugsweise auf den Förderbändern 90 hin und her bewegt. Der Draht 20 verläuft aus Richtung der ersten Hauptfläche 31 kommend in Richtung der zweiten Hauptfläche 32 auf die Platte zu und durch diese hindurch. Die Hohlzylinder-Rohlinge 40 werden so beim Schneiden gegen die Förderbänder 90 gedrückt. Die Hohlzylinder-Rohlinge 40 verbleiben dadurch an vorbestimmten Stellen in der Platte 30 und können während oder nach Beendigung des Schneidvorgangs automatisiert aus der Platte 30 entnommen werden, z.B. mittels eines Roboters (z.B. mit einem Greifer oder Sauger).

Vor dem Schneiden in Schritt 200 können optional mehrere Platten 30 aus, vorzugsweise geschlossenzelligem, Weichschaum miteinander verklebt werden. Dies wird durch den in Fig. 4 gestrichelt dargestellten Schritt 110 gezeigt. So kann eine mehrlagige Platte hergestellt werden, die eine gewünschte Stabilität und/oder Dicke besitzt. Aus dieser mehrlagigen Platte können dann im Schritt 200 unmittelbar Hohlzylinder-Rohlinge 50 ausgeschnitten werden. Zur genaueren Einstellung der Dicke der mehrlagigen Platte kann die Platte jedoch in einem vorangehenden, optionalen Schritt 120 auch zuerst auf eine gewünschte Gesamtdicke zugeschnitten werden, z.B. mittels einer Drahtschneidmaschine oder einer Bandsäge.

Die Hohlzylinder-Rohlinge 50 werden so aus der Platte 30 geschnitten, dass eine Längsachse 44 des jeweiligen Hohlzylinders parallel zur Plattendicke 33 ist. So kann die Vielzahl von Hohlzylinder-Rohlingen 50 unter minimalem Materialaufwand herstellt werden. Die Plattendicke 33 beträgt vorzugsweise mindestens 0,5 cm, mindestens 1 cm, mindestens 2 cm, mindestens 4 cm oder mindestens 5 cm, sodass der jeweilige Hohlzylinder-Rohling 50 vorzugsweise eine Länge entlang der Längsachse von mindestens 0,5 cm, mindestens 1 cm, mindestens 2 cm, mindestens 4 cm oder mindestens 5 cm hat. Da der Rohrträger nur eine begrenzte Länge hat und eine nachträgliche Stückelung der Hohlzylinder-Rohlinge 50 in einem separaten Bearbeitungsschritt vorzugsweise vermieden wird, hat die Platte 30 vorzugsweise eine Dicke 33 von höchstens 20 cm oder höchstens 10cm.

Um die Herstellung der Hohlzylinder-Rohlinge 50 aus der Platte 30 zu vereinfachen, kann die Platte 30 gekühlt werden. Darüber hinaus können mehrere Platten 30, wie bereits oben zu Schritt 110 besprochen, vor dem Schneiden der Hohlzylinder-Rohlinge 50 zu einem Block 38 zusammengefügt werden (wobei die Platten 30 entlang ihrer Hauptflächen miteinander verbunden und/oder verklebt sind) und/oder jeweilige Platten 30 zur Versteifung mehrlagig hergestellt sein. Ein solcher Block 38 ist schematisch in Fig. 8 dargestellt.

Der Schlitz 45 wird vorzugsweise bereits beim Schneiden in Schritt 200 eingebracht.

In einem dritten Schritt 300 des Verfahrens werden die mindestens 2 Tragelemente 60 (siehe Fig. 2 und 3) in den Hohlzylinder 40 eingesetzt. Zu diesem Zweck kann der Hohlzylinder-Rohling 50 mit entsprechenden Aussparungen versehen werden. Bei diesen Aussparungen kann es sich insbesondere um Fenster 48 (siehe Fig. 6) handeln, in deren Bereich der Hohlzylinder-Rohling 50 ausgeschnitten wurde. Wie in Fig. 6 gezeigt, können sich die Fenster 48 hierbei von einer inneren Mantelfläche 46 bis zu einer äußeren Mantelfläche 47 durch den Hohlzylinder 40 erstrecken.

In einem nachfolgenden Schritt 400 kann das mindestens eine Lastverteilelement 70 (siehe Fig. 1 bis 3) an dem Hohlzylinder 40 angebracht werden, insbesondere im Bereich der und/oder in Überlappung mit den Tragelementen 60. Desweiteren kann in einem nachfolgenden Schritt 500 die Rohrschelle 80 um das mindestens eine Lastverteilelement 70 angebracht werden.

Wie darüber in Fig. 1 bis 3 angedeutet ist, ist bei einem so hergestellten Hohlzylinder 40 die Zellstruktur des geschlossenzelligen Weichschaums entlang der inneren Mantelfläche 46 und entlang der äußeren Mantelfläche 47 freigelegt. Im Bereich der ersten Stirnseite 41 und im Bereich der zweiten Stirnseite 42 kann der Hohlzylinder 40 dagegen eine Haut aufweisen, sodass die Zellstruktur an der ersten Stirnseite 41 und/oder an der zweiten Stirnseite 42 nicht freiliegt.

Die Erfinder haben festgestellt, dass ein so hergestellter Hohlzylinder eine bessere Haftung daran angebrachter Lastverteilelemente 70 ermöglicht. Es wird angenommen, dass dies zumindest teilweise durch das Freilegen der geschlossenzelligen Zellstruktur des Weichschaums im Bereich der äußeren Mantelfläche 47 erreicht wird, weil durch die verwendeten Haftmittel (z.B. ein Klebstoff) so eine bessere Verankerung im Weichschaum möglich ist. Darüber hinaus wird mit dem beschriebenen Verfahren eine höhere Formtreue der äußeren Mantelfläche 47 erreicht. Es wird angenommen, dass auch hierdurch eine bessere Haftung zumindest teilweise erreicht wird, weil der Hohlzylinder 40 gleichmäßig an dem Lastverteilelement 70 befestigt werden kann, ohne dass durch eine Verformung des Hohlzylinders 40 Spannungen eingebracht werden.

Fig. 7 zeigt eine weitere Variante eines Hohlzylinders 40 für einen erfindungsgemäßen Rohrträger, wobei gleiche Elemente mit gleichen Bezugszeichen gekennzeichnet sind.

Bei dieser Variante wird der Hohlzylinder 40 aus einer mehrlagigen Platte 30 geschnitten, wobei beispielhaft ein Hohlzylinder 40 mit drei Lagen 36a, 36b, 36c gezeigt ist (es können jedoch auch zwei, vier oder mehr Lagen Verwendung finden). Die erste Lage 36a und die zweite Lage 36b sind an Stirnflächen entlang eines Bereichs 37a fest miteinander verbunden. Die zweite Lage 36b und die dritte Lage 36c sind ferner in einem zweiten Bereich 37b fest miteinander verbunden (vorzugsweise über das gleiche Verfahren wie die erste Lage 36a und die zweite Lage 36b). Die entsprechend hergestellte mehrlagige Platte, die zur Herstellung solcher Hohlzylinder 40 verwendet wird, kann insbesondere eine höhere Steifigkeit als eine einlagige Platte aufweisen. Darüber hinaus können auf diese Weise Hohlzylinder 40 beliebiger Länge hergestellt werden, ohne dass hierfür Platten verschiedener Dicken vorrätig gehalten werden müssen.

Soweit die vorgehende Beschreibung den Ausdruck "im Wesentlichen" verwendet, sind auch solche Ausführungsformen umfasst, in denen das jeweilige Merkmal vollständig oder komplett vorliegt. Die Wörter "Vielzahl" oder "mehrere" sind im Sinne von "mindestens zwei", d.h., zwei oder mehr, zu verstehen. Sofern konkrete Werte angegeben werden, umfassen diese vorzugsweise auch geringfügige Abweichungen von diesen Werten, wie etwa Abweichungen von +/- 10% oder +/- 5% des jeweiligen Werts. Einzelne Aspekte der Erfindung können eigenständige Erfindungen bilden und auch als solche beansprucht werden.

Die Erfindung betrifft insbesondere die folgenden Aspekte:
1. Rohrträger (10) zur Aufhängung oder Abstützung einer isolierten Rohrleitung, wobei der Rohrträger (10) sich entlang einer Längsachse (44) erstreckt und der Rohrträger (10) aufweist:
   - einen Hohlzylinder (40) aus, vorzugsweise geschlossenzelligem, Weichschaum, wobei der Hohlzylinder (40) vorzugsweise eine erste Stirnseite (41), eine zweite Stirnseite (42) und eine sich zwischen der ersten Stirnseite (41) und der zweiten Stirnseite (42) erstreckende Zylinderwand (43) aufweist, die sich entlang der Längsachse (44) erstreckt, wobei der Hohlzylinder (40) vorzugsweise entlang mindestens eines Schlitzes (45) geöffnet ist, der sich von der ersten Stirnseite (41) zur zweiten Stirnseite (42) erstreckt, wobei der Hohlzylinder (40) vorzugsweise mindestens 2 cm, mindestens 4 cm, oder mindestens 5 cm lang ist;
   - mindestens zwei Tragelemente (60), die in den Hohlzylinder (40) eingesetzt sind;
   - mindestens ein oder mehrere Lastverteilelemente (70), die im Bereich der Tragelemente (60) am Hohlzylinder befestigt sind;
   wobei der Rohrträger (10) vorzugsweise eine Rohrschelle (80) aufweist.
2. Verfahren nach Aspekt 1, wobei das mindestens eine Lastverteilelement (70) auf der äußere Mantelfläche (47) des Hohlzylinders (40) haftet, vorzugsweise darauf geklebt ist.
3. Verfahren nach dem vorstehenden Aspekt, wobei die Zellen des Weichschaums entlang einer äußeren Mantelfläche (47) des Hohlzylinders (40) freiliegen und/oder geöffnet sind, wobei mindestens ein Lastverteilelement (70) unmittelbar auf die freiliegenden und/oder geöffneten Zellen geklebt ist.
4. Rohrträger (10) nach einem der vorstehenden Aspekte, wobei der Schlitz (45) parallel zur Längsachse (44) verläuft.
5. Rohrträger (10) nach einem der vorstehenden Aspekte, wobei sich der Schlitz (45) von einer inneren Mantelfläche (46) bis zu einer äußeren Mantelfläche (47) des Hohlzylinders (40) erstreckt.
6. Rohrträger (10) nach einem der vorstehenden Aspekte, wobei sich maximal ein Schlitz (45) von der ersten Stirnseite (41) zur zweiten Stirnseite (42) und von der inneren Mantelfläche (46) zur äußeren Mantelfläche (47) erstreckt.
7. Rohrträger (10) nach einem der vorstehenden Aspekte, wobei der Hohlzylinder (40) in Umfangsrichtung aus einem einzelnen einheitlichen Segment besteht.
8. Rohrträger (10) nach einem der Aspekte 1 bis 6, wobei der Hohlzylinder (40) in Umfangsrichtung mehrere getrennte Segmente aufweist, beispielsweise 2 Segmente, vorzugsweise wobei die Segmente miteinander verklebt oder miteinander verklebbar sind.
9. Rohrträger (10) nach einem der vorstehenden Aspekte, wobei die Zylinderwand (43) eine innere Mantelfläche (46) aufweist, wobei die Zellen des Weichschaums entlang der inneren Mantelfläche (46) freiliegen und/oder geöffnet sind.
10. Rohrträger (10) nach einem der vorstehenden Aspekte, wobei der Hohlzylinder (40) entlang der ersten Stirnseite (41) und/oder entlang der zweiten Stirnseite (42) eine Außenhaut aufweist.
11. Rohrträger (10) nach einem der vorstehenden Aspekte, wobei die Zellen des Weichschaums entlang der ersten Stirnseite (41) und/oder entlang der zweiten Stirnseite (42) nicht freiliegen.
12. Rohrträger (10) nach einem der vorstehenden Aspekte, wobei die Tragelemente (60) jeweils in ein im Hohlzylinder (40) ausgebildetes Fenster (48) eingesetzt sind.
13. Rohrträger (10) nach dem vorgehenden Aspekt, wobei sich die Fenster (48) durch die Zylinderwand (43) hindurch erstrecken, vorzugsweise quer zur Längsrichtung.
14. Rohrträger (10) nach einem der beiden vorgehenden Aspekte, wobei die Fenster (48) als ringsegmentförmige Öffnungen ausgebildet sind.
15. Rohrträger (10) nach einem der vorstehenden Aspekte, wobei die Tragelemente (60) als Ringsegmente und/oder aus einem Hartschaum ausgebildet sind.
16. Rohrträger (10) nach einem der vorstehenden Aspekte, wobei das mindestens eine Lastverteilelement (70) oder die mehreren Lastverteilelemente (70) jeweils kreissegmentförmig ausgebildet sind, vorzugsweise mit einem Mittelpunktswinkel von mindestens 120°, mindestens 150°, mindestens 170° oder über 180°.
17. Rohrträger (10) nach einem der vorstehenden Aspekte, wobei mindestens zwei kreissegmentförmige Lastverteilelemente (70) auf die äußere Mantelfläche (47) des Hohlzylinders aufgebracht werden, wobei vorzugsweise jeweils ein Lastverteilelement (70) einem jeweiligen Tragelement (60) zugeordnet ist.
18. Rohrträger (10) nach einem der vorstehenden Aspekte, wobei eine äußere Oberfläche des Lastverteilelements (70) strukturiert oder aufgeraut ist, wobei auf die äußere Oberfläche des Lastverteilelements (70) vorzugsweise ein Strukturlack aufgebracht ist.
19. Rohrträger (10) nach dem vorstehenden Aspekt,
   wobei die äußere Oberfläche eine Rauheit Rₐ von mindestens 30 µm, mindestens 50 µm oder mindestens 70 µm aufweist.
20. Rohrträger (10) nach einem der vorstehenden Aspekte, wobei eine äußere Oberfläche eines jeweiligen Lastverteilelements (70) mindestens einen und vorzugsweise zwei Anschläge für die Rohrschelle (80) bereitstellt, um ein Verrutschen der Rohrschelle (80) in Richtung der Längsachse (44) zu begrenzen.
21. Rohrträger (10) nach dem vorstehenden Aspekt, wobei ein jeweiliger Anschlag durch mindestens eine oder mehrere Vorsprünge oder Noppen (72) gebildet ist, die entlang der äußeren Oberfläche des Lastverteilelements (70) ausgebildet sind.
22. Rohrträger (10) nach einem der vorstehenden Aspekte, wobei der Hohlzylinder (40) in Richtung der Längsachse (44) aus mehreren Lagen (36a, 36b, 36c) gebildet ist, wobei die einzelnen Lagen vorzugsweise hohlzylinderförmig sind.
23. Rohrträger (10) nach dem vorstehenden Aspekt, wobei die Lagen (36a, 36b, 36c) mittels Klebetechnik miteinander verbunden sind.
24. Rohrträger (10) nach einem der beiden vorstehenden Aspekte, wobei die Lagen (36a, 36b, 36c) unterschiedliche Wärmeleitkoeffizienten und/oder Schallabsorptionskoeffizienten haben.
25. Rohrträger (10) nach einem der vorstehenden Aspekte, wobei der Weichschaum weicher als das Material der Tragelemente ist, insbesondere weicher als ein Hartschaum der Tragelemente.
26. Rohrträger (10) nach einem der vorstehenden Aspekte, wobei die Tragelemente (60) aus einem Hartschaum ausgebildet sind, der eine Dichte von mindestens 100 kg/m³ hat.
27. Rohrträger (10) nach einem der vorstehenden Aspekte, wobei die Tragelemente (60) aus einem Hartschaum ausgebildet sind, der eine Dichte von mindestens 110 kg/m³ hat, wobei der Hartschaum vorzugsweise ein PET-Hartschaum ist.
28. Rohrträger (10) nach einem der vorstehenden Aspekte, wobei die Tragelemente (60) aus einem Hartschaum ausgebildet sind, der eine Dichte von mindestens 120 kg/m³, mindestens 150 kg/m³ oder mindestens 200 kg/m³ hat, wobei der Hartschaum vorzugsweise ein PET-Hartschaum ist.
29. Rohrträger (10) nach einem der vorstehenden Aspekte, wobei die Rohrschelle (80) eine Aufhängung (81) zur Befestigung an einer Decke oder eine Stütze zur Abstützung auf einem Boden aufweist.
30. Rohrträger (10) nach einem der vorstehenden Aspekte, wobei der Hohlzylinder (40) einen runden oder nicht-runden, insbesondere ovalen, quadratischen oder rechteckigen, Querschnitt aufweist.
31. Rohrträger (10) nach einem der vorstehenden Aspekte, wobei das eine oder die mehreren Lastverteilelemente (70) jeweils durch ein Krafverteilblech gebildet sind.
32. Rohrträger (10) nach einem der vorstehenden Aspekte, wobei die Länge des Hohlzylinders (40) weniger als 3 Mal, vorzugsweise weniger als 2 Mal die Länge der Rohrschelle beträgt.
33. Rohrträger (10) nach einem der vorstehenden Aspekte, wobei die Länge des Tragelements vorzugsweise weniger als 1/2 der Länge des Hohlzylinders beträgt.
34. Rohrträger (10) nach einem der vorstehenden Aspekte, wobei die Länge des Tragelements weniger als 4/10 der Länge des Hohlzylinders beträgt.
35. Rohrträger (10) nach einem der vorstehenden Aspekte, wobei die Länge des Tragelements weniger als 1/3 der Länge des Hohlzylinders beträgt.
36. Rohrträger (10) nach einem der vorstehenden Aspekte, wobei die Länge des Tragelements weniger als 1,5 Mal, vorzugsweise weniger als 1 Mal, die Länge der Rohrschelle beträgt.
37. Rohrträger (10) nach einem der vorstehenden Aspekte, wobei der Rohrträger (10) entlang der Längsachse (44) eine Rohrträger-Länge L_{R} hat, die Tragelemente (60) entlang der Längsachse (44) jeweils eine Tragelement-Länge L_{T} haben, und die Rohrschelle entlang der Längsachse (44) eine Rohrschellen-Länge L_{S} hat, vorzugsweise wobei eine Durchgangsöffnung (49) des Rohrträgers (10) einen Durchmesser von mindestens 5 cm, mindestens 6 cm oder mindestens 8 cm hat.
38. Rohrträger (10) nach dem vorstehenden Aspekt, wobei das Verhältnis L_{T}/L_{R} höchstens 0,5 beträgt.
39. Rohrträger (10) nach einem der beiden vorstehenden Aspekte, wobei das Verhältnis L_{T}/L_{R} höchstens 0,45 beträgt.
40. Rohrträger (10) nach einem der Aspekte 37 bis 39, wobei das Verhältnis L_{S}/L_{R} mindestens 0,3 beträgt.
41. Rohrträger (10) nach einem der Aspekte 37 bis 40, wobei das Verhältnis L_{S}/L_{R} mindestens 0,4 beträgt.
42. Rohrträger (10) nach einem der Aspekte 37 bis 41, wobei das Verhältnis L_{S}/L_{R} mindestens 0,5 beträgt.
43. Rohrträger (10) nach einem der Aspekte 37 bis 42, wobei das Verhältnis L_{S}/L_{T} mindestens 0,6 beträgt.
44. Rohrträger (10) nach einem der Aspekte 37 bis 42, wobei das Verhältnis L_{S}/L_{T} mindestens 0,7 beträgt.
45. Rohrträger (10) nach einem der Aspekte 37 bis 42, wobei das Verhältnis L_{S}/L_{T} mindestens 0,8 beträgt.
46. Rohrträger (10) nach einem der Aspekte 37 bis 45, wobei das Verhältnis L_{S}/L_{T} mindestens 0,9 beträgt.
47. Verfahren zur Herstellung eines Rohrträgers (10) zur Aufhängung oder Abstützung einer isolierten Rohrleitung, wobei das Verfahren die folgenden Schritte umfasst:
   - Bereitstellen (100) einer oder mehrerer Platten (30) aus, vorzugsweise geschlossenzelligem, Weichschaum mit einer ersten Hauptfläche (31), einer gegenüberliegenden zweiten Hauptfläche (32) und einer sich zwischen der ersten Hauptfläche (31) und der zweiten Hauptfläche (32) erstreckenden Plattendicke (33);
   - Herstellen (200) eines Hohlzylinders (40), wobei der Hohlzylinder (40) eine erste Stirnseite (41), eine zweite Stirnseite (42) und eine sich zwischen der ersten Stirnseite (41) und der zweiten Stirnseite (42) erstreckende Zylinderwand (43) aufweist, wobei der Hohlzylinder (40) entlang mindestens eines Schlitzes (45) geöffnet ist, der sich von der ersten Stirnseite (41) zur zweiten Stirnseite (42) erstreckt, wobei zur Herstellung des Hohlzylinders ein oder mehrere Hohlzylinder-Rohlinge (50) aus der einen oder den mehreren Platten (30) geschnitten werden;
   - Einsetzen (300) von mindestens zwei Tragelementen (60) in den Hohlzylinder (40);
   - Anbringen mindestens eines Lastverteilelements (70) oder mehrerer Lastverteilelemente (70) um den Hohlzylinder (40) im Bereich der Tragelemente (60).
48. Verfahren nach dem vorstehenden Aspekt, wobei der Rohrträger (10) ein Rohrträger nach einem der Aspekte 1 bis 46ist.
49. Verfahren nach einem der beiden vorstehenden Aspekte,
   wobei die Hohlzylinder-Rohlinge als Hohlzylinder aus der einen oder den mehreren Platten geschnitten werden; oder
   wobei die Hohlzylinder-Rohlinge als Hohlzylindersegmente aus der einen oder den mehreren Platten geschnitten werden, wobei zwei oder mehr Hohlzylindersegmente zu einem Hohlzylinder zusammengesetzt und/oder miteinander verklebt werden.
50. Verfahren nach einem der drei vorstehenden Aspekte, wobei der eine oder die mehreren Hohlzylinder-Rohlinge (50) aus der Platte (30) ausgesägt, vorzugsweise mittels einer Drahtschneidmaschine, mittels einer Bandsäge, ausgestanzt und/oder ausgefräst werden, optional mittels CNC-Technik.
51. Verfahren nach einem der vorstehenden Aspekte, wobei die eine oder die mehreren Platten während des Schneidens entlang ihrer jeweiligen ersten und/oder entlang ihrer jeweiligen zweiten Hauptfläche abgestützt sind, vorzugsweise auf mindestens zwei Förderbändern.
52. Verfahren nach einem der vorstehenden Aspekte, wobei die eine oder die mehreren Platten während dem Schneiden horizontal oder im Wesentlichen horizontal angeordnet sind.
53. Verfahren nach einem der vorstehenden Aspekte, wobei ein Schneidmittel einer jeweiligen Schneidmaschine beim Schneiden in Richtung nach unten, vorzugsweise vertikal nach unten, durch die eine oder die mehreren Platten verläuft.
54. Verfahren nach einem der vorstehenden Aspekte, wobei aus einer einzelnen Platte (30) mehrere Hohlzylinder (40) oder mehrere Hohlzylinder-Rohlinge (50) geschnitten werden.
55. Verfahren nach einem der vorstehenden Aspekte, wobei die Plattendicke (33) mindestens 0,5 cm, mindestens 1 cm, mindestens 2 cm, vorzugsweise mindestens 4 cm, stärker bevorzugt mindestens 5 cm beträgt.
56. Verfahren nach einem der vorstehenden Aspekte, wobei die jeweilige Platte (30) eine Plattenbreite (34) und eine Plattentiefe (35) aufweist, wobei die Plattendicke (33) kleiner als die Plattenbreite (34) und die Plattentiefe (35) ist, wobei der Hohlzylinder (4) so aus der Platte (30) ausgeschnitten wird, dass die Längsachse (44) parallel zur Plattendicke (33) ist.
57. Verfahren nach einem der vorstehenden Aspekte, wobei die Tragelemente (60) jeweils in ein im Hohlzylinder (40) ausgebildetes Fenster (48) eingesetzt werden.
58. Verfahren nach dem vorgehenden Aspekt, wobei sich die Fenster (48) durch die Zylinderwand (43) hindurch erstrecken, vorzugsweise quer zur Längsrichtung.
59. Verfahren nach einem der beiden vorgehenden Aspekte, wobei der Hohlzylinder (40) in einer Halterung fixiert wird, um die Fenster (48) in den Hohlzylinder (40) einzubringen.
60. Verfahren nach einem der drei vorstehenden Aspekte, wobei die Fenster (48) als ringsegmentförmige Öffnungen ausgebildet sind.
61. Verfahren nach einem der vorstehenden Aspekte, wobei das mindestens eine Lastverteilelement (70) auf der äußeren Mantelfläche (47) des Hohlzylinders (40) befestigt, vorzugsweise aufgeklebt, wird.
62. Verfahren nach einem der vorstehenden Aspekte, wobei die Zellen des Weichschaums entlang der äußeren Mantelfläche (47) freiliegen und/oder geöffnet sind und das mindestens eine Lastverteilelement (70) unmittelbar auf die freiliegenden und/oder geöffneten Zellen geklebt wird.
63. Verfahren nach einem der vorstehenden Aspekte, wobei eine äußere Oberfläche des Lastverteilelements (70) strukturiert oder aufgeraut ist.
64. Verfahren nach dem vorstehenden Aspekt,
   wobei die äußere Oberfläche eine Rauheit Rₐ von mindestens 30 µm, mindestens 50 µm oder mindestens 70 µm aufweist.
65. Verfahren nach einem der vorstehenden Aspekte, wobei die Platte (30) vor und/oder bei Herstellung des Hohlzylinder-Rohlings (50) temperiert wird, insbesondere gekühlt, vorzugsweise in einer Kühlkammer.
66. Verfahren nach dem vorstehenden Aspekt, wobei die eine oder die mehreren Platten auf eine Temperatur unter 25 °C, stärker bevorzugt auf eine Temperatur unter 15 °C temperiert werden.
67. Verfahren nach einem der vorstehenden Aspekte, wobei mehre Hohlzylinder (40) oder Hohlzylinder-Rohlinge (50) aus der Platte (30) mittels einer Bandsäge ausgesägt werden, wobei die Platte (30) zur Stabilisierung entlang der ersten Hauptfläche (31) und/oder entlang der zweiten Hauptfläche (32) gehalten und/oder eingeklemmt wird.
68. Verfahren nach einem der vorstehenden Aspekte, wobei die Platte (30) in Richtung der Plattendicke (33) aus mehreren Lagen (36a, 36b, 36c) gebildet ist.
69. Verfahren nach dem vorstehenden Aspekt, wobei die verschiedenen Lagen (36a, 36b, 36c) jeweils aus einem Weichschaum, vorzugsweise aus einem geschlossenzelligen Weichschaum, ausgebildet sind.
70. Verfahren nach dem vorstehenden Aspekt, wobei die verschiedenen Lagen (36a, 36b, 36c) aus demselben Weichschaum ausgebildet sind.
71. Verfahren nach Aspekt 68 oder 69, wobei die Lagen (36a, 36b, 36c) aus Materialien mit unterschiedlichen Wärmeleitkoeffizienten und/oder Schallabsorptionskoeffizienten ausgebildet sind.
72. Verfahren nach einem der vier vorstehenden Aspekte, wobei die Lagen (36a, 36b, 36c) mittels Klebetechnik miteinander verbunden sind.
73. Verfahren nach einem der vorstehenden Aspekte, wobei aus der einen oder den mehreren Platten (30) Hohlzylinder-Rohlinge (50) verschiedener Innendurchmesser und/oder verschiedener Außendurchmesser geschnitten werden.
74. Verfahren nach einem der vorstehenden Aspekte, wobei der Hohlzylinder (40) einen runden oder nicht-runden, insbesondere ovalen, quadratischen oder rechteckigen, Querschnitt aufweist.
75. Verfahren nach einem der vorstehenden Aspekte, wobei das Verfahren ferner den Schritt umfasst:
   - Anbringen (500) einer Rohrschelle (80) um die mindestens eine oder die mehreren Lastverteilelemente (70).
76. Rohrträger (10) zur Aufhängung oder Abstützung einer isolierten Rohrleitung hergestellt nach dem Verfahren gemäß einem der Aspekte bis 47 bis 55.

## Patentansprüche

1. Rohrträger (10) zur Aufhängung und/oder Abstützung einer isolierten Rohrleitung, wobei sich der Rohrträger (10) entlang einer Längsachse (44) erstreckt und aufweist:
- einen Hohlzylinder (44) aus Weichschaum;
- mindestens zwei Tragelemente (60) aus Hartschaum, die in den Hohlzylinder (40) eingesetzt sind; und
- ein oder mehrere Lastverteilelemente (70), die im Bereich der Tragelemente (60) am Hohlzylinder befestigt sind;
wobei der Hartschaum ein PET-Hartschaum mit einer Dichte von mindestens 120 kg/m³, mindestens 140 kg/m³, mindestens 150 kg/m³ oder mindestens 180 kg/m³ ist.

2. Rohrträger (10) nach Anspruch 1,
wobei der Hohlzylinder (40) eine erste Stirnseite (41), eine zweite Stirnseite (42) und eine sich zwischen der ersten Stirnseite (41) und der zweiten Stirnseite (42) erstreckende Zylinderwand (43) aufweist, die sich entlang der Längsachse (44) erstreckt, wobei der Hohlzylinder (40) entlang mindestens eines Schlitzes (45) geöffnet ist, der sich von der ersten Stirnseite (41) zur zweiten Stirnseite (42) erstreckt;
wobei die Zellen des Weichschaums entlang einer äußeren Mantelfläche (47) des Hohlzylinders (40) freiliegen und/oder geöffnet sind.

3. Rohrträger (10) nach dem vorstehenden Anspruch,
wobei sich maximal ein Schlitz (45) von der ersten Stirnseite (41) zur zweiten Stirnseite (42) und von der inneren Mantelfläche (46) zur äußeren Mantelfläche (47) erstreckt; und/oder
wobei der Hohlzylinder (40) in Umfangsrichtung aus einem einzelnen einheitlichen Segment gebildet ist.

4. Rohrträger (10) nach einem der vorstehenden Ansprüche,
wobei die Tragelemente (60) als Ringsegmente ausgebildet sind; und
wobei die Tragelemente (60) jeweils in ein im Hohlzylinder (40) ausgebildetes Fenster (48) eingesetzt sind, wobei die Fenster (48) ringsegmentförmig sind und sich durch die Zylinderwand (43) hindurch erstrecken.

5. Rohrträger (10) nach einem der vorstehenden Ansprüche,
wobei der Rohrträger (10) entlang der Längsachse (44) einer Rohrträger-Länge L_{R} hat;
wobei die Tragelemente (60) entlang der Längsachse (44) jeweils eine Tragelement-Länge L_{T} haben;
wobei das Verhältnis L_{T}/L_{R} höchstens 0,5 oder höchstens 0,45 beträgt.

6. Rohrträger (10) nach einem der vorstehenden Ansprüche,
wobei der Rohrträger (10) entlang der Längsachse (44) einer Rohrträger-Länge L_{R} hat;
wobei der Rohrträger (10) eine Rohrschelle (80) aufweist, die eine radial äußere Oberfläche des einen oder der mehreren Lastverteilelemente (70) umgreift, wobei die Rohrschelle (80) entlang der Längsachse (44) eine Rohrschellen-Länge Ls hat;
wobei das Verhältnis L_{S}/L_{R} mindestens 0,3, mindestens 0,4 oder mindestens 0,5 beträgt.

7. Rohrträger (10) nach einem der vorstehenden Ansprüche,
wobei die Tragelemente (60) entlang der Längsachse (44) jeweils eine Tragelement-Länge L_{T} haben;
wobei der Rohrträger (10) eine Rohrschelle (80) aufweist, die eine radial äußere Oberfläche des einen oder der mehreren Lastverteilelemente (70) umgreift, wobei die Rohrschelle (80) entlang der Längsachse (44) eine Rohrschellen-Länge L_{S} hat;
wobei das Verhältnis L_{S}/L_{T} mindestens 0,6, mindestens 0,7, mindestens 0,8 oder mindestens 0,9 beträgt.

8. Rohrträger (10) nach einem der vorstehenden Ansprüche, wobei an einer radial äußeren Oberfläche mindestens eines Lastverteilelements mindestens ein Anschlag für eine Rohrschelle (80) vorgesehen ist, der ausgebildet ist, um ein Verrutschen der Rohrschelle (80) entlang der Längsachse (44) zu begrenzen.

9. Rohrträger (10) nach dem vorstehenden Anspruch, wobei der Anschlag durch eine oder mehrere Noppen (72) oder Vorsprünge gebildet wird, die entlang der äußeren Oberfläche des jeweiligen Lastverteilelements vorgesehen sind und von dieser nach außen vorstehen.

10. Rohrträger (10) nach einem der beiden vorstehenden Ansprüche, wobei an der radial äußeren Oberfläche des Lastverteilelements zwei Anschläge vorgesehen sind, um ein Verrutschen der Rohrschelle (80) entlang der Längsachse (44) in beiden Richtungen zu begrenzen.

11. Rohrträger (10) nach einem der vorstehenden Ansprüche, wobei auf eine äußere Oberfläche des mindestens einen oder der mehreren Lastverteilelemente (70) ein Strukturlack aufgebracht ist.

12. Rohrträger (10) nach einem der vorstehenden Ansprüche, wobei eine äußere Oberfläche des mindestens einen oder der mehreren Lastverteilelemente (70) eine Rauheit Rₐ von mindestens 30 µm, mindestens 50 µm oder mindestens 70 µm aufweist.

13. Rohrträger (10) zur Aufhängung und/oder Abstützung einer isolierten Rohrleitung, wobei sich der Rohrträger (10) entlang einer Längsachse (44) erstreckt und aufweist:
- einen Hohlzylinder (44) aus Weichschaum;
- mindestens zwei Tragelemente (60) aus Hartschaum, die in den Hohlzylinder (40) eingesetzt sind; und
- ein oder mehrere Lastverteilelemente (70), die im Bereich der Tragelemente (60) am Hohlzylinder befestigt sind;
wobei der Rohrträger (10) entlang der Längsachse (44) einer Rohrträger-Länge L_{R} hat und die Tragelemente (60) entlang der Längsachse (44) jeweils eine Tragelement-Länge L_{T} haben;
wobei mindestens eine oder mehrere der folgenden Bedingungen erfüllt ist:
- das Verhältnis L_{T}/L_{R} beträgt höchstens 0,5 oder höchstens 0,45; und/oder
- der Rohrträger (10) weist eine Rohrschelle (80) auf, wobei die Rohrschelle (80) entlang der Längsachse (44) eine Rohrschellen-Länge L_{S} hat und das Verhältnis L_{S}/L_{R} mindestens 0,3, mindestens 0,4 oder mindestens 0,5 beträgt; und/oder
- der Rohrträger (10) weist eine Rohrschelle (80) auf, wobei die Rohrschelle (80) entlang der Längsachse (44) eine Rohrschellen-Länge L_{S} hat und das Verhältnis L_{S}/L_{T} mindestens 0,6, mindestens 0,7, mindestens 0,8 oder mindestens 0,9 beträgt.

14. Rohrträger (10) zur Aufhängung und/oder Abstützung einer isolierten Rohrleitung, wobei sich der Rohrträger (10) entlang einer Längsachse (44) erstreckt und aufweist:
- einen Hohlzylinder (44) aus Weichschaum;
- mindestens zwei Tragelemente (60) aus Hartschaum, die in den Hohlzylinder (40) eingesetzt sind; und
- ein oder mehrere Lastverteilelemente (70), die im Bereich der Tragelemente (60) am Hohlzylinder befestigt sind;
wobei an einer radial äußeren Oberfläche mindestens eines Lastverteilelements (60) mindestens ein Anschlag für eine Rohrschelle (80) vorgesehen ist, der ausgebildet ist, um ein Verrutschen der Rohrschelle (80) entlang der Längsachse (44) zu begrenzen.

15. Rohrträger (10) zur Aufhängung und/oder Abstützung einer isolierten Rohrleitung, wobei sich der Rohrträger (10) entlang einer Längsachse (44) erstreckt und aufweist:
- einen Hohlzylinder (44) aus Weichschaum;
- mindestens zwei Tragelemente (60) aus Hartschaum, die in den Hohlzylinder (40) eingesetzt sind; und
- ein oder mehrere Lastverteilelemente (70), die im Bereich der Tragelemente (60) am Hohlzylinder befestigt sind;
wobei auf die äußere Oberfläche ein Strukturlack aufgebracht ist und/oder die äußere Oberfläche eine Rauheit Rₐ von mindestens 30 µm, mindestens 50 µm oder mindestens 70 µm aufweist.
